# FASCICULE DE BREVET EUROPEEN

(11) **EP 2 878 188 B1**
(45) Date de publication et mention de la délivrance du brevet: **14.09.2016**
(21) Numéro de dépôt: 14195636.7
(22) Date de dépôt: 01.12.2014
(51) Int. Cl.: A01D 34/535

(54) **Dispositif de fixation de couteau sur le rotor d'une faucheuse-débroussailleuse**
Vorrichtung zur Befestigung eines Messers an dem Rotor eines Böschungsmähers
Device for fastering a knive on the rotor of a hedge and grass cutter

(30) Priorité: 02.12.2013 FR 1361921
(43) Date de publication de la demande: 03.06.2015
(73) Titulaire: Kuhn-Audureau S.A., 85260 La Copechagnière (FR)
(72) Inventeur: Gautron, Pascal, 85250 Saint-Fulgent (FR)
(74) Mandataire: Esch, Esther Evelyne

(56) Documents cités:
- EP-A1- 2 039 234
- EP-A1- 2 366 275
- FR-A1- 2 963 201

## Description

La présente invention se rapporte à un dispositif de fixation d'un couteau sur le rotor d'une faucheuse-débroussailleuse, comportant :
- une manille dont une branche est pourvue d'un oeilleton, la manille portant le couteau,
- un axe de liaison
   s'étendant en longueur suivant un axe géométrique longitudinal qu'il présente,
   pouvant, suivant cet axe géométrique, occuper une position longitudinale opérationnelle par rapport à la manille, dans laquelle position longitudinale opérationnelle l'axe de liaison est engagé dans au moins une oreille solidaire du rotor, traverse l'oeilleton et est immobilisé dans l'oreille et dans l'oeilleton suivant l'axe géométrique,
- un moyen d'immobilisation longitudinale de l'axe de liaison
   présentant une configuration de fermeture, dans laquelle le moyen d'immobilisation longitudinale immobilise l'axe de liaison dans sa position longitudinale opérationnelle par rapport à la manille,
   présentant par ailleurs une configuration d'ouverture, dans laquelle le moyen d'immobilisation longitudinale autorise un premier déplacement de l'axe de liaison et de la manille entre eux suivant l'axe géométrique, ce premier déplacement faisant quitter à l'axe de liaison sa position longitudinale opérationnelle par rapport à la manille.

Un tel dispositif est connu du document EP 2 366 275 A1. Sur ce dispositif, le moyen d'immobilisation longitudinale comporte une pièce élastique. Selon une première variante de réalisation, cette pièce élastique est un ressort globalement conformé en U venant s'insérer à l'intérieur d'une fente radiale que présente l'oreille liée au rotor. Selon une deuxième variante de réalisation, la pièce élastique comporte une pièce plate disposée à l'extrémité d'un ressort fixé à l'intérieur de l'oreille. L'axe de liaison comporte une gorge apte à coopérer avec la pièce élastique. Dans la position longitudinale opérationnelle de l'axe de liaison, sa gorge se situe au niveau des branches du U, respectivement au niveau de la pièce plate. Le moyen d'immobilisation longitudinale peut alors se trouver dans une configuration de fermeture, dans laquelle chaque branche du ressort en U, respectivement la pièce plate, est placée dans la gorge, ce qui a pour effet d'immobiliser l'axe de liaison suivant son axe géométrique longitudinal. Le moyen d'immobilisation longitudinale peut également occuper une configuration d'ouverture, dans laquelle chaque branche du ressort en U, respectivement la pièce plate, est écartée de la gorge. Dans cette configuration d'ouverture, le moyen d'immobilisation longitudinale libère l'axe de liaison et rend possible son extraction de l'oreille. Un inconvénient du dispositif de fixation connu consiste en ce que la pièce élastique peut être rendue inopérante par l'introduction de saletés au niveau de l'axe de liaison et autour de la pièce élastique. Ces saletés peuvent empêcher d'écarter suffisamment la pièce élastique de sa gorge, ce qui complique voire empêche le démontage de l'axe de liaison. Dans certains cas, des saletés peuvent se loger entre la pièce élastique et la gorge et tendent, à la longue, à déplacer la pièce élastique vers sa configuration d'ouverture. Il peut s'en suivre la perte de l'axe de liaison et de la manille portant le couteau. La même conséquence identique peut venir d'une rupture de la pièce élastique due, par exemple, à son oxydation après un certain nombre d'heures d'utilisation de la machine.

La présente invention a pour but de proposer un dispositif de fixation d'un couteau sur le rotor d'une faucheuse-débroussailleuse qui ne présente pas l'inconvénient précité.

A cet effet, l'invention est caractérisée par le fait que
le moyen d'immobilisation longitudinale est conçu pour être placé dans sa configuration d'ouverture par la manille présentant une orientation non radiale par rapport au rotor,
le moyen d'immobilisation longitudinale est conçu pour être placé dans sa configuration de fermeture par la manille présentant une orientation radiale par rapport au rotor.

Au repos, la manille présente naturellement une orientation non radiale par rapport au rotor. En effet, par le poids propre du couteau, ce dernier s'oriente non radialement, il repose généralement contre la surface extérieure du rotor et place la manille dans une orientation non radiale. La manille oriente alors le moyen d'immobilisation longitudinale dans sa configuration d'ouverture. Le moyen d'immobilisation autorise alors un premier déplacement de l'axe de liaison et de la manille entre eux suivant l'axe géométrique. Ce premier déplacement fait quitter à l'axe de liaison sa position longitudinale opérationnelle et lui permet d'être extrait de l'oeilleton et/ou de l'oreille. En vue d'extraire l'axe de liaison de l'oeilleton et/ou de l'oreille, un opérateur saisit par exemple l'axe de liaison, par exemple par l'une de ses extrémités, et lui fait effectuer le premier déplacement relatif à la manille. Ainsi, la configuration d'ouverture du moyen d'immobilisation longitudinale est déterminée par l'orientation non radiale de la manille. Du fait du moment d'inertie de la manille et du couteau autour de l'axe de liaison, cette orientation existe toujours au repos. Par suite, le risque que le moyen d'immobilisation longitudinale ne puisse être placé dans sa configuration d'ouverture est très réduit. La maintenance du dispositif de fixation et du rotor est grandement facilitée.

Au travail, le rotor tournant à grande vitesse, le moment d'inertie de la manille et du couteau autour de l'axe de liaison entraîne que la manille s'oriente radialement au rotor. Elle place alors le moyen d'immobilisation longitudinale dans sa configuration de fermeture, si bien que tant que le rotor tourne, l'axe de liaison ne peut quitter sa position longitudinale opérationnelle. Pendant le travail, une ouverture accidentelle du moyen d'immobilisation longitudinale est donc exclue. Il en résulte une très grande sécurité d'utilisation de la machine.

Selon une caractéristique avantageuse de l'invention,
le dispositif de fixation comporte un premier moyen de blocage,
le premier moyen de blocage présente une configuration de blocage, dans laquelle il maintient l'axe de liaison dans sa position longitudinale opérationnelle alors que le moyen d'immobilisation longitudinale se trouve dans sa configuration d'ouverture,

le premier de moyen de blocage quitte sa configuration de blocage par une action manuelle extérieure exercée sur lui.

Lorsque le moyen d'immobilisation longitudinale se trouve dans sa configuration d'ouverture, ce premier moyen de blocage sécurise l'axe de liaison dans sa position longitudinale opérationnelle. Ainsi, lorsque le rotor est au repos, l'axe de liaison ne peut s'extraire accidentellement de lui-même de l'oeilleton et/ou de l'oreille. Il en résulte une grande sécurité de la machine lorsque celle-ci est manoeuvrée ou déplacée sur les chemins et les routes.

D'autres caractéristiques et avantages de l'invention ressortiront de la description ci-après avec référence aux dessins annexés qui représentent notamment plusieurs exemples de réalisation non limitatifs du dispositif de fixation selon l'invention.

Sur ces dessins :
- la figure 1 représente une vue en perspective d'une faucheuse-débroussailleuse comportant un outil de coupe, attelée à un tracteur ;
- la figure 2 représente une vue en perspective de l'outil de coupe comportant un rotor portant au moins un couteau et muni d'un dispositif de fixation du couteau conforme à l'invention ;
- les figures 3 à 9 représentent un premier exemple de réalisation du dispositif de fixation de couteau selon l'invention ;
- les figures 10 à 16 représentent un deuxième exemple de réalisation du dispositif de fixation de couteau selon l'invention, la figure 15 étant une vue suivant la coupe XV-XV de la figure 13, la figure 16 étant une vue suivant la coupe XVI-XVI de la figure 14 ;
- les figures 17 à 23 représentent un troisième exemple de réalisation du dispositif de fixation de couteau selon l'invention, la figure 22 étant une vue suivant la coupe XXII-XXII de la figure 20, la figure 23 étant une vue suivant la coupe XXIII-XXIII de la figure 21.

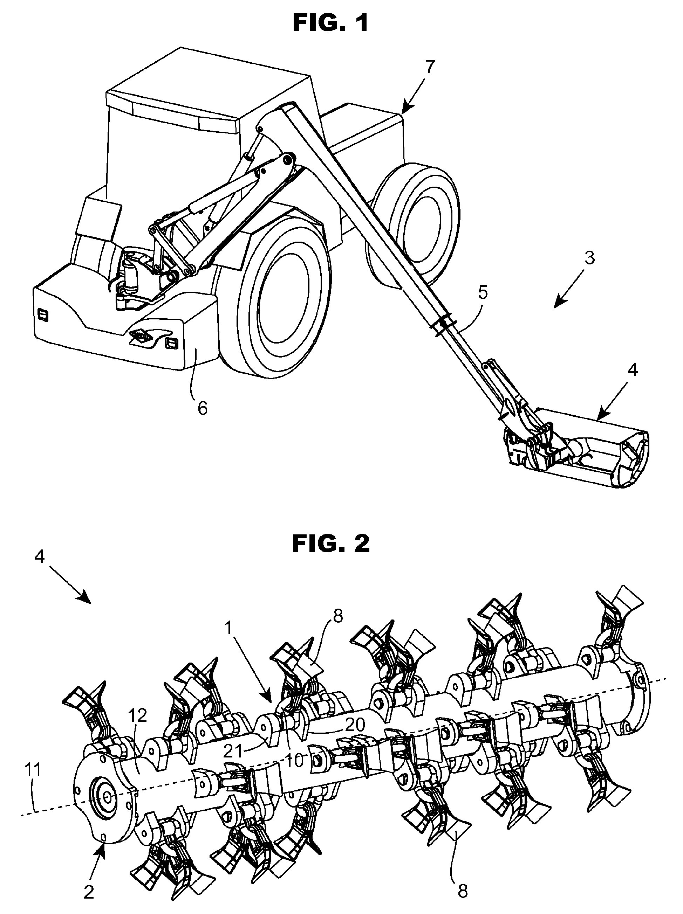

Le dispositif de fixation (1) d'un couteau objet de l'invention est placé sur le rotor (2) d'une faucheuse-débroussailleuse (3). Une telle machine représentée à la figure 1 comporte généralement un outil de coupe (4) placé à l'extrémité d'un bras (5) articulé. Ce bras (5) est relié à un bâti (6) positionné à l'arrière d'un tracteur (7) qui permet de déplacer et d'animer l'outil de coupe (4).

L'outil de coupe (4) est représenté plus en détail sur la figure 2. L'outil de coupe (4) comporte un rotor (2) portant plusieurs couteaux (8). Chaque couteau (8) comporte une ouverture (9) permettant le passage d'une manille (10) respective. La manille (10) porte le couteau (8) et est articulée au rotor (2) au moyen du dispositif de fixation (1) objet de l'invention. Tel que représenté sur la figure 2, le rotor (2) peut comporter un nombre élevé de couteaux (8). Chaque couteau (8) est disposé sur la périphérie du rotor (2). Chaque couteau (8) est porté par une manille (10) respective qui est articulée au rotor (2) au moyen d'un dispositif de fixation (1) respectif.

Au travail, le rotor (2) est animé en rotation autour de son axe longitudinal (11). Chaque manille (10) et le couteau (8) qu'elle porte se placent radialement par rapport au rotor (2) sous l'effet de la force centrifuge. Les couteaux (8) en mouvement déchiquettent alors les branchages et les buissons et coupent les herbes et les plantes. La présence d'un obstacle sur une partie de la largeur de travail de l'outil de coupe (4) n'entraîne pas le blocage du rotor (2) car les couteaux (8) présentent une mobilité très importante autour de leurs manilles (10) respectives et les manilles (10) sont elles-mêmes articulées sur le rotor (2).

Au repos, le rotor (2) étant arrêté, les couteaux (8) se placent non radialement par rapport au rotor (2) sous l'effet de la gravité. Ils retombent par exemple contre la surface périphérique (12) du rotor (2).

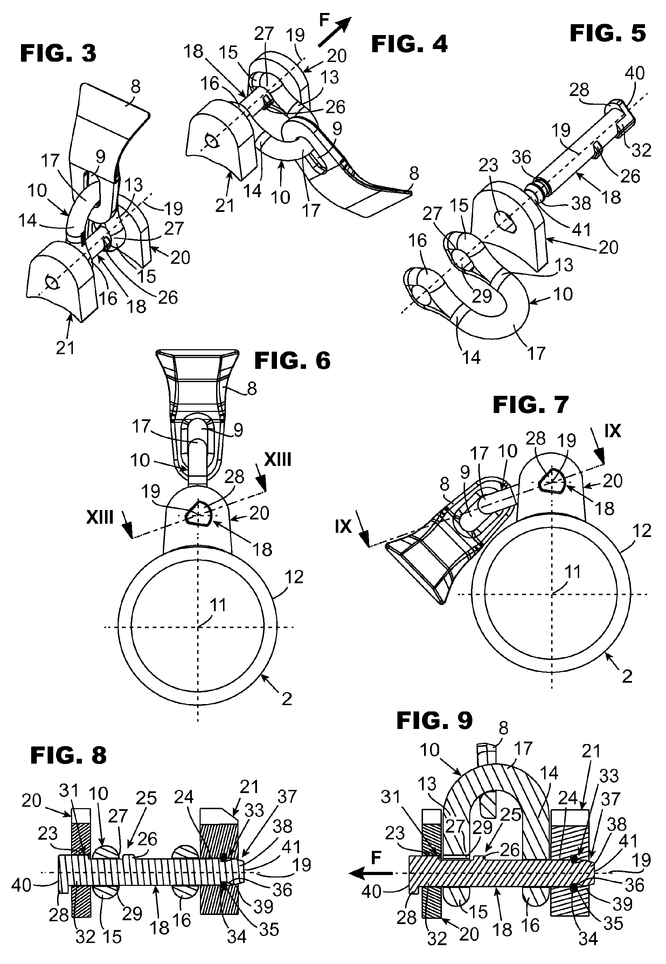

Un dispositif de fixation (1) d'un couteau (8) sur le rotor (2) conforme à l'invention est montré plus en détail sur les figures 3 à 9 notamment. Le dispositif de fixation (1) comporte une manille (10). Celle-ci comporte au moins une branche (13, 14) pourvue d'un oeilleton (15, 16). Cette branche (13, 14) est prolongée par une partie courbe (17) qui est disposée dans l'ouverture (9) du couteau (8). Cette partie courbe (17) retient le couteau (8) suivant une direction radiale au rotor (2). La manille (10) présente une forme en U. Ses deux branches (13 et 14) comportent chacune un oeilleton (15, 16) respectif. La partie courbe (17) de la manille (10) joint les deux branches (13 et 14). Le dispositif de fixation (1) comporte également un axe de liaison (18). L'axe de liaison (18) présente un axe géométrique (19) longitudinal et s'étend en longueur suivant cet axe géométrique (19) longitudinal. L'axe géométrique (19) longitudinal s'étend suivant l'axe longitudinal (11) du rotor (2) autour duquel ce dernier est animé en rotation, par exemple sensiblement parallèlement audit axe longitudinal (11). L'axe de liaison (18) peut, suivant son axe géométrique (19), occuper une position longitudinale opérationnelle par rapport à la manille (10). Cette position est notamment représentée à la figure 3. Dans cette position longitudinale opérationnelle, l'axe de liaison (18) est engagé dans au moins une oreille (20, 21) solidaire du rotor (2). L'oreille (20) est visible notamment sur la figure 5 qui représente, de manière éclatée, l'axe de liaison (18), la manille (10) et ladite oreille (20). Cette oreille (20) se présente par exemple sous la forme d'une patte liée au rotor (2). Cette patte s'étend depuis la surface périphérique (12) du rotor (2), sensiblement radialement à celui-ci, ainsi que le montrent notamment les figures 6 et 7. L'oreille (20, 21) comporte un orifice (23, 24) dans lequel l'axe de liaison (18) est inséré lorsqu'il se trouve dans sa position longitudinale opérationnelle. Tel que montré par la vue en coupe de la figure 8, dans cette position, l'axe de liaison (18) traverse l'orifice (23, 24). Dans sa position longitudinale opérationnelle, l'axe de liaison (18) traverse l'oeilleton (15, 16) de la branche (13, 14) de la manille (10). Dans cette position, l'orifice (23, 24) et l'oeilleton (15, 16) sont sensiblement alignés suivant l'axe géométrique (19) de l'axe de liaison (18). Tel que représenté sur les figures 3 et 8, l'axe de liaison (18) dans sa position longitudinale opérationnelle traverse chaque oeilleton (15, 16) de la manille (10). En sus, l'axe de liaison (18) est engagé dans deux oreilles (20 et 21) liées au rotor (2). L'axe de liaison (18) est inséré dans chaque orifice (23, 24) qu'il traverse. Les orifices (23 et 24) des deux oreilles (20 et 21) ainsi que les deux oeilletons (15 et 16) sont sensiblement alignés les uns avec les autres suivant l'axe géométrique (19). Dans la position longitudinale opérationnelle de l'axe de liaison (18), chaque oreille (20, 21) du rotor (2) est accolée à une branche (13, 14) respective de la manille (10).

Dans sa position longitudinale opérationnelle, l'axe de liaison (18) est immobilisé dans l'oreille (20, 21) et dans l'oeilleton (15, 16) suivant l'axe géométrique (19). A cet effet, le dispositif de fixation (1) selon l'invention comporte un moyen d'immobilisation longitudinale (25) de l'axe de liaison (18). Ce moyen d'immobilisation longitudinale (25) présente notamment une configuration de fermeture, dans laquelle le moyen d'immobilisation longitudinale (25) immobilise l'axe de liaison (18) dans sa position longitudinale opérationnelle par rapport à la manille (10). Cette configuration de fermeture est illustrée par les figures 3, 6 et 8. Le moyen d'immobilisation longitudinale (25) présente par ailleurs une configuration d'ouverture, dans laquelle il autorise un premier déplacement de l'axe de liaison (18) et de la manille (10) entre eux suivant l'axe géométrique (19), ce premier déplacement faisant quitter à l'axe de liaison (18) sa position longitudinale opérationnelle par rapport à la manille (10). Cette configuration d'ouverture est illustrée par les figures 4, 7 et 9. Tel que représenté sur les figures 4 et 9, l'axe de liaison (18) peut opérer ledit premier déplacement par rapport à la manille (10) dans un sens indiqué par la flèche (F). Ce premier déplacement permet à l'axe de liaison (18) d'être extrait de l'oeilleton (15, 16) et/ou de l'oreille (20, 21), en vue par exemple de remplacer l'axe de liaison (18), la manille (10) ou le couteau (8) après un certain nombre d'heures d'utilisation de la faucheuse-débroussailleuse (3).

L'invention est notamment caractérisée par le fait que le moyen d'immobilisation longitudinale (25) est conçu pour être placé dans sa configuration d'ouverture par la manille (10) présentant une orientation non radiale par rapport au rotor (2) telle que celle des figures 4 et 7. Le moyen d'immobilisation longitudinale (25) est configuré pour autoriser le premier déplacement seulement lorsque la manille (10) présente ladite orientation non radiale par rapport au rotor (2). Lorsque le rotor (2) est arrêté, le couteau (8) retombe contre la surface périphérique (12) du rotor (2) et entraîne la manille (10) avec lui. Celle-ci oriente automatiquement le moyen d'immobilisation longitudinale (25) dans sa configuration d'ouverture, ce qui permet à un opérateur de translater l'axe de liaison (18) et la manille (10) l'un par rapport à l'autre suivant l'axe géométrique (19) afin d'extraire l'axe de liaison (18) de l'oeilleton (15, 16) et/ou de l'oreille (20, 21). Dans le cas du dispositif de fixation (1) des figures 3 à 9, l'axe de liaison (18) est translaté par rapport à la manille (10) qui au cours de ladite extraction de l'axe de liaison (18), demeure dans un premier temps immobile par rapport aux oreilles (20 et 21) suivant l'axe géométrique (19).

L'invention est également caractérisée par le fait que le moyen d'immobilisation longitudinale (25) est conçu pour être placé dans sa configuration de fermeture par la manille (10) présentant une orientation radiale par rapport au rotor (2). Cette orientation radiale est montrée par les figures 3 et 6. Le moyen d'immobilisation longitudinale (25) est donc configuré pour empêcher le premier déplacement lorsque la manille (10) est orientée radialement au rotor (2). Lorsque le rotor (2) est animé en rotation, le couteau (8) et la manille (10) s'orientent radialement, la manille place alors automatiquement le moyen d'immobilisation longitudinale (25) dans sa configuration de fermeture. Le premier déplacement de l'axe de liaison (18) et de la manille (10) entre eux est alors rendu impossible et l'axe de liaison (18) est immobilisé dans l'oreille (20, 21) et dans l'oeilleton (15, 16) suivant son axe géométrique (19).

Selon les exemples de réalisation qui seront décrits plus en détail par la suite, l'orientation non radiale de la manille (10) par rapport au rotor (2), dans laquelle le moyen d'immobilisation longitudinale (25) est placé dans sa configuration d'ouverture, est constituée au moins par l'orientation non radiale de la manille (10) qui résulte du couteau (8) reposant sur la surface périphérique (12) du rotor (2). Un angle que ladite orientation non radiale associée au moyen d'immobilisation longitudinale (25) placé dans sa configuration d'ouverture forme par rapport à l'orientation radiale de la manille (10), est par exemple compris entre 45° et 135°, notamment voisin de 90°.

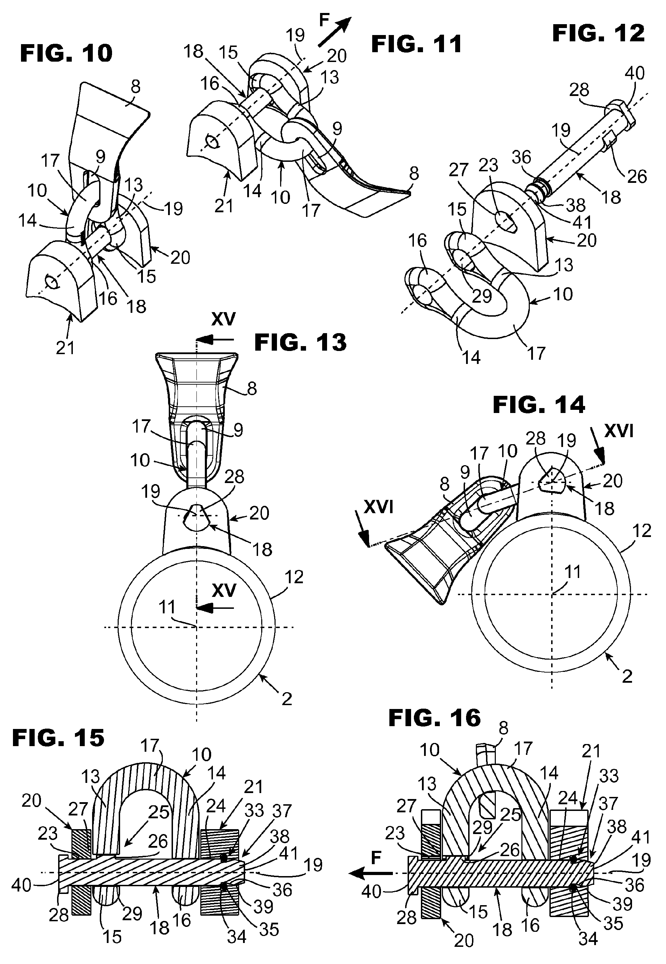

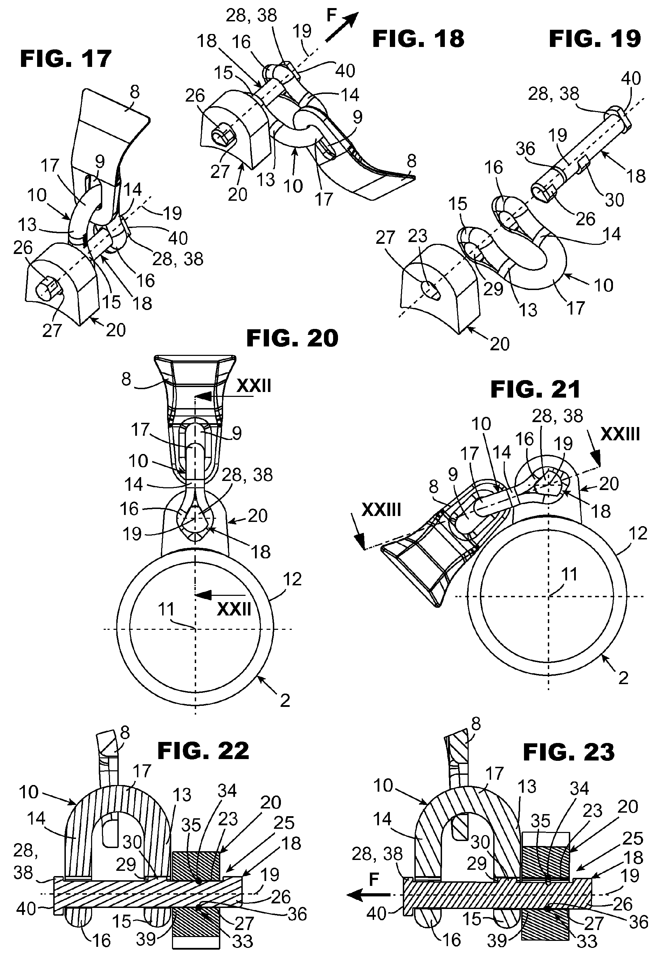

Le moyen d'immobilisation longitudinale (25) comporte une première partie (26) de l'axe de liaison (18) et une deuxième partie (27) de l'oreille (20) ou de la manille (10), notamment de l'oeilleton (15). Le moyen d'immobilisation longitudinale (25) est notamment constitué par ladite première partie (26) et ladite deuxième partie (27), ce qui sous-tend que le moyen d'immobilisation longitudinale (25) est opérationnel sans élément supplémentaire coopérant avec l'axe de liaison (18) et l'oreille (20) ou la manille (10) et pouvant être mal monté ou perdu. La première partie (26) et la deuxième partie (27) sont configurées notamment de telle sorte que dans au moins une première position angulaire des première et deuxième parties (26 et 27) entre elles autour de l'axe géométrique (19), la première partie (26) soit empêchée de traverser la deuxième partie (27) suivant l'axe géométrique (19) depuis la position longitudinale opérationnelle de la première partie (26). La première partie (26) et la deuxième partie (27) sont configurées également de telle sorte que dans une deuxième position angulaire des première et deuxième parties (26 et 27) entre elles autour de l'axe géométrique (19), la première partie (26) soit autorisée à traverser la deuxième partie (27) suivant l'axe géométrique (19). Cette deuxième position angulaire relative est distincte de la première position relative. Selon les exemples de réalisation des figures, dans la position longitudinale opérationnelle de l'axe de liaison (18) par rapport à la manille (10), la première partie (26) et la deuxième partie (27) ne se recouvrent pas suivant l'axe géométrique (19).
Tel que représenté sur les figures 3 à 9 associées à un premier exemple de réalisation du dispositif de fixation (1), la manille (10) comporte la deuxième partie (27), plus précisément la deuxième partie (27) est située au niveau de la branche (13) de la manille (10), en particulier au niveau de l'oeilleton (15). Dans la position longitudinale opérationnelle de la figure 8 notamment, la deuxième partie (27) est située entre la première partie (26) et l'oreille (20) suivant l'axe géométrique (19). L'axe de liaison (18) comporte une partie de retenue (28). Une vue en perspective de cette partie de retenue (28) est donnée à la figure 5. Dans la position longitudinale opérationnelle, cette partie de retenue (28) dépasse de l'oreille (20) suivant l'axe géométrique (19). L'oreille (20) est placée entre la partie de retenue (28) et la première partie (26). Cette partie de retenue (28) permet de saisir l'axe de liaison (18) afin de l'insérer dans l'oreille (20) et la manille (10), ou de l'en extraire selon le cas. Il pourrait aussi être envisagé que la partie de retenue (28) serve à empêcher une translation de l'axe de liaison (18) depuis sa position longitudinale opérationnelle, suivant une direction orientée de l'oreille (20) vers la branche (13). Dans la première position angulaire relative de la figure 8, le premier déplacement est empêché de telle sorte que la première partie (26) ne puisse pas être translatée en direction de l'oreille (20), donc qu'elle ne puisse passer ni à travers la branche (13) de la manille (10), ni à travers l'orifice (23) de l'oreille (20).
Un deuxième exemple de réalisation du dispositif de fixation (1) est illustré par les figures 10 à 16. Selon ce deuxième exemple de réalisation, l'oreille comporte la deuxième partie (27), plus précisément la deuxième partie (27) est située au niveau de l'orifice (23) de l'oreille (20). L'axe de liaison (18) comporte également une partie de retenue (28), notamment visible à la figure 12, dont la configuration et la fonction sont similaires à celles du premier exemple de réalisation. Dans la première position angulaire relative de la figure 15, le premier déplacement indiqué par la flèche (F) de la figure 16 est empêché de telle sorte que la première partie (26) de l'axe de liaison (18) ne puisse ni se dégager de la branche (13) de la manille (10), ni passer au travers de l'orifice (23) de l'oreille (20).
Un troisième exemple de réalisation du dispositif de fixation (1) est illustré par les figures 17 à 23. Selon ce troisième exemple de réalisation, l'oreille (20) comporte la deuxième partie (27), plus précisément la deuxième partie (27) est située au niveau de l'orifice (23). Dans la position longitudinale opérationnelle de l'axe de liaison (18) représentée notamment à la figure 22, la manille (10) est maintenue en place suivant l'axe géométrique (19) entre une partie de retenue (28) de l'axe de liaison (18) et l'oreille (20). Suivant l'axe géométrique (19), on trouve dans l'ordre la partie de retenue (28), la manille (10), l'oreille (20) et enfin la première partie (26) de l'axe de liaison (18). Dans la première position angulaire relative de la figure 22, le premier déplacement (F) indiqué par la flèche de la figure 23 est empêché de telle sorte que la première partie (26) ne puisse pas être translatée par rapport à l'oreille (20) en direction de la branche (13) de la manille (10). Dans ce troisième exemple de réalisation, la partie de retenue (28) sert notamment à empêcher une translation de l'axe de liaison (18) depuis sa position longitudinale opérationnelle en sens contraire du premier déplacement indiqué par la flèche (F).

### Selon l'invention,

la manille (10), dans son orientation radiale par rapport au rotor (2), place les première et deuxième parties (26 et 27) dans leur première position angulaire relative,

la manille (10), dans son orientation non radiale par rapport au rotor (2), place les première et deuxième parties (26 et 27) dans leur deuxième position angulaire relative.

Selon le premier exemple de réalisation, l'orientation radiale des figures 3 et 6 est donc associée à la première position angulaire relative montrée par la figure 8. De même pour le deuxième exemple de réalisation, les vues des figures 10 et 13 sont associées à la vue de la figure 15. Pour le troisième exemple de réalisation, les vues des figures 17 et 20 correspondent à la vue de la figure 22. Par ailleurs, selon le premier exemple de réalisation, l'orientation non radiale des figures 4 et 7 est associée à la deuxième position angulaire relative montrée par la figure 9. De même pour le deuxième exemple de réalisation, les vues des figures 11 et 14 sont associées à la vue de la figure 16. Pour le troisième exemple de réalisation, les vues des figures 18 et 21 correspondent à la vue de la figure 23.

Ainsi que le montrent les trois exemples de réalisation décrits précédemment, l'invention prévoit avantageusement que
la première partie (26) présente une première section transversale dépourvue de symétrie de révolution autour de l'axe géométrique (19),
la deuxième partie (27) présente une deuxième section transversale également dépourvue de symétrie de révolution autour de l'axe géométrique (19),

Une section transversale se définit comme une section dans un plan perpendiculaire à l'axe géométrique (19). Selon les exemples de réalisation des figures, l'axe de liaison (18) présente une forme essentiellement cylindrique. La première partie (26) est une partie de la longueur de l'axe de liaison (18) dépourvue de symétrie de révolution autour de son axe géométrique (19). Cette première partie (26) comporte donc une première section transversale dépourvue de symétrie de révolution autour de l'axe géométrique (19). Selon le premier exemple de réalisation, la deuxième partie (27) est une partie au moins, voire la totalité d'un trou (29) que l'oeilleton (15) comporte. La deuxième partie (27) s'étend donc suivant l'axe géométrique (19) sur tout ou partie de la longueur du trou (29) mesurée suivant l'axe géométrique (19). Selon les deuxième et troisième exemples de réalisation, la deuxième partie (27) est une partie au moins, voire la totalité de l'orifice (23). La deuxième partie (27) s'étend donc suivant l'axe géométrique (19) sur tout ou partie de la longueur de l'orifice (23) mesurée suivant l'axe géométrique (19). Les première et deuxième sections transversales sont telles que dans la première position angulaire relative des première et deuxième parties (26 et 27), la première partie (26) ne puisse pas être translatée à travers la deuxième partie (27) suivant l'axe géométrique (19). Ceci est obtenu par le fait que dans la première position angulaire relative, la projection de la première section transversale sur un plan perpendiculaire à l'axe géométrique (19) ne s'inscrit pas dans la projection de la deuxième section transversale sur ledit plan. Les première et deuxième sections transversales sont également telles que dans la deuxième position angulaire relative des première et deuxième parties (26 et 27), la première partie (26) puisse passer à travers la deuxième partie (27) suivant l'axe géométrique (19). Ceci est obtenu par le fait que dans la deuxième position angulaire relative, la projection de la première section transversale sur un plan perpendiculaire à l'axe géométrique (19) s'inscrit dans la projection de la deuxième section transversale sur ledit plan. La première partie (26) peut être translatée à travers la deuxième partie (27) suivant l'axe géométrique (19) seulement lorsque la manille (10) présente l'orientation non radiale par rapport au rotor (2). Selon les exemples de réalisation des figures, les première et deuxième sections transversales présentent des formes respectives sensiblement identiques entre elles.
Selon le premier exemple de réalisation, l'oeilleton (15) comporte un trou (29) présentant la deuxième section transversale non symétrique autour de l'axe géométrique (19). Tel que montré notamment par les figures 3 et 8, la première partie (26) de l'axe de liaison (18) présentant la première section transversale est située, dans la position longitudinale opérationnelle de l'axe de liaison (18), entre les branches (13 et 14) de la manille (10). L'oreille (20) est placée du côté de la branche (13) opposé à celui où se trouve la première partie (26). L'orifice (23) de l'oreille (20) présente une section transversale dont la forme est au moins identique à celle de la première section transversale, ou dont la section transversale est circonscrite à la première section transversale. Lorsque la manille (10) se trouve dans son orientation non radiale par rapport au rotor (2), la première section transversale et la deuxième section transversale coïncident angulairement l'une avec l'autre autour de l'axe géométrique (19) de sorte que les première et deuxième parties (26 et 27) puissent passer l'une à l'intérieur de l'autre. A la figure 5, les première et deuxième sections transversales sont représentées en coïncidence angulaire l'une avec l'autre. Tel que représenté sur la figure 9, la première partie (26) peut ainsi, depuis sa position longitudinale opérationnelle, être déplacée suivant la flèche (F) en direction de l'oreille (20) en passant à l'intérieur de la deuxième partie (27). La première partie (26) peut ensuite également traverser l'orifice (23) de l'oreille (20), de sorte que l'axe de liaison (18) puisse être extrait de l'oeilleton (15) et éventuellement aussi de l'oreille (20). Lorsque la manille (10) se trouve dans son orientation radiale par rapport au rotor (2) et que l'axe de liaison (18) se trouve dans sa position longitudinale opérationnelle, la première section transversale et la deuxième section transversale ne coïncident plus angulairement l'une avec l'autre. Ainsi, les première et deuxième parties (26 et 27) ne peuvent pas passer l'une à l'intérieur de l'autre, ce qui apparaît clairement sur la figure 8. L'axe de liaison (18) ne peut alors pas être extrait de la manille (10) par coulissement de la première partie (26) à l'intérieur de la deuxième partie (27).
Selon le deuxième exemple de réalisation, l'orifice (23) de l'oreille (20) présente la deuxième section transversale non symétrique autour de l'axe géométrique (19). Le moyen d'immobilisation longitudinale (25) comporte une liaison par coopération de formes entre l'axe de liaison (18) et la manille (10). Cette liaison par coopération de formes est telle que l'axe de liaison (18) dans sa position longitudinale opérationnelle et la manille (10) pivotent conjointement autour de l'axe géométrique (19) par rapport à la deuxième partie (27) que l'oreille (20) comporte. Tel que représenté notamment à la figure 15, la liaison par coopération de formes a lieu entre le trou (29) de l'oeilleton (15) et la partie de l'axe de liaison (18) emboîtée dans le trou (29). Selon cette représentation, cette liaison par coopération de formes a lieu entre la première partie (26) de l'axe de liaison (18) et le trou (29) de l'oeilleton (15). Selon cette représentation, le trou (29) de l'oeilleton (15) présente une section transversale pouvant coopérer avec la première section transversale de telle sorte qu'un pivotement de la manille (10) autour de l'axe géométrique (19) soit transmis à l'axe de liaison (18). En particulier, la section transversale du trou (29) et la première section transversale de la première partie (26) présentent des formes respectives sensiblement identiques entre elles, ce qui apparaît sur la vue éclatée de la figure 12. Lorsque la manille (10) se trouve dans son orientation non radiale par rapport au rotor (2), elle oriente la première section transversale pour que celle-ci coïncide angulairement avec la deuxième section transversale. A la figure 12, les première et deuxième sections transversales sont représentées en coïncidence angulaire l'une avec l'autre. Tel que représenté à la figure 16, la première partie (26) peut alors passer à l'intérieur de la deuxième partie (27). La première partie (26) peut ainsi, depuis sa position longitudinale opérationnelle, être déplacée dans le sens de la flèche (F) en direction de l'oreille (20) et traverser l'orifice (23) de l'oreille (20). L'axe de liaison (18) peut ainsi être extrait de l'oeilleton (15) et éventuellement aussi de l'oreille (20). Lorsque la manille (10) se trouve dans son orientation radiale par rapport au rotor (2) et que l'axe de liaison (18) se trouve dans sa position longitudinale opérationnelle, la première section transversale se trouve orientée de telle sorte qu'elle ne coïncide plus angulairement avec la deuxième section transversale. Tel que cela ressort sur la figure 15, la première partie (26) ne peut alors pas passer à l'intérieur de la deuxième partie (27), si bien que l'axe de liaison (18) ne peut pas être extrait de la manille (10) par coulissement de la première partie (26) à l'intérieur de la deuxième partie (27). Selon le troisième exemple de réalisation, l'orifice (23) de l'oreille (20) présente la deuxième section transversale non symétrique autour de l'axe géométrique (19). Le moyen d'immobilisation longitudinale (25) comporte une liaison par coopération de formes entre l'axe de liaison (18) et la manille (10). Cette liaison par coopération de formes est telle que l'axe de liaison (18) dans sa position longitudinale opérationnelle et la manille (10) pivotent conjointement autour de l'axe géométrique (19) par rapport à la deuxième partie (27) de l'oreille (20). Tel que représenté notamment à la figure 22, la liaison par coopération de formes a lieu entre l'axe de liaison (18) et l'oeilleton (15), précisément entre le trou (29) de l'oeilleton (15) et la partie de l'axe de liaison (18) emboîtée dans le trou (29). Selon cette représentation, le trou (29) de l'oeilleton (15) présente une section transversale pouvant coopérer avec la section transversale d'une portion longitudinale (30) de l'axe de liaison (18) de telle sorte qu'un pivotement de la manille (10) autour de l'axe géométrique (19) soit transmis à l'axe de liaison (18). En particulier, ainsi qu'il apparaît sur la vue éclatée de la figure 19, la section transversale du trou (29) et la section transversale de la portion longitudinale (30) de l'axe de liaison (18) présentent des formes respectives sensiblement identiques entre elles. Lorsque la manille (10) se trouve dans son orientation non radiale par rapport au rotor (2), elle oriente la première section transversale pour que celle-ci coïncide angulairement avec la deuxième section transversale. A la figure 19, les première et deuxième sections transversales sont représentées en coïncidence angulaire l'une avec l'autre. Tel que représenté à la figure 23, la première partie (26) peut alors passer à l'intérieur de la deuxième partie (27). La première partie (26) peut ainsi, depuis sa position longitudinale opérationnelle, être déplacée suivant la flèche (F) en direction de l'oreille (20) et traverser l'orifice (23) de l'oreille (20). L'axe de liaison (18) peut ainsi être extrait de l'oreille (20). Lorsque la manille (10) se trouve dans son orientation radiale par rapport au rotor (2) et que l'axe de liaison (18) se trouve dans sa position longitudinale opérationnelle, la première section transversale se trouve orientée de telle sorte qu'elle ne coïncide plus angulairement avec la deuxième section transversale. Ainsi, tel que montré par la figure 22, la première partie (26) ne peut pas passer à l'intérieur de la deuxième partie (27), si bien que l'axe de liaison (18) ne peut pas être extrait de l'oreille (20) par coulissement de la première partie (26) à l'intérieur de la deuxième partie (27). Selon ce troisième exemple de réalisation, dans la position longitudinale opérationnelle de l'axe de liaison (18), l'oreille (20) et la branche (13) de la manille (10) qui lui est accolée sont prisonnières axialement entre la partie de retenue (28) de l'axe de liaison (18) située à côté de la manille (10) et la première partie (26) située à côté de la deuxième partie (27).

Ainsi qu'il apparaît dans les exemples de réalisation précités, l'invention prévoit que dans la position longitudinale opérationnelle de l'axe de liaison (18), la première partie (26) et la deuxième partie (27) puissent pivoter librement l'une par rapport à l'autre autour de l'axe géométrique (19). Ainsi, si en fonctionnement le couteau (8) ou la manille (10) heurte un obstacle, la manille (10) peut quitter son orientation radiale pour s'effacer face à l'obstacle et ceci sans entraîner en rotation l'axe de liaison (18) avec elle.

Selon le premier exemple de réalisation des figures 3 à 9, le dispositif de fixation (1) comporte un moyen d'immobilisation en rotation (31) destiné à rendre l'axe de liaison (18), dans sa position longitudinale opérationnelle, immobile ou sensiblement immobile en rotation autour de l'axe géométrique (19) par rapport à l'oreille (20, 21). Ce moyen d'immobilisation réduit l'usure de l'axe de liaison (18) consécutive à une rotation ou à des pivotements répétés sur lui-même autour de l'axe géométrique (19) pendant le fonctionnement de la faucheuse-débroussailleuse (3).

Selon ce premier exemple de réalisation,
le moyen d'immobilisation en rotation (31) comporte une liaison par coopération de formes entre une partie longitudinale (32) de l'axe de liaison (18) et l'orifice (23) de l'oreille (20) dans lequel l'axe de liaison (18) est engagé,
cette partie longitudinale (32) coopère avec l'orifice (23) de sorte à y être immobilisée en rotation autour de l'axe géométrique (19).
La liaison par coopération de formes a lieu entre l'orifice (23) de l'oreille (20) et la partie longitudinale (32) emboîtée dans cet orifice (23). Un avantage de cette liaison par coopération de formes est que l'immobilisation en rotation de l'axe de liaison (18) peut être opérée par les seuls axe de liaison (18) et orifice (23) de l'oreille (20). Le recours à une pièce supplémentaire telle une vis, une goupille ou un pion coopérant avec l'axe de liaison (18) et l'oreille (20) est alors superflu. En sus, pendant le fonctionnement, la partie longitudinale (32) de l'axe de liaison (18) servant à son immobilisation en rotation est logée à l'intérieur de l'orifice (23) et se trouve donc protégée des chocs. Dans ce premier exemple de réalisation, la partie longitudinale (32) visible notamment sur les figures 5 et 8 présente une section transversale dépourvue de symétrie de révolution autour de l'axe géométrique (19). Tel que montré par la figure 8, cette section transversale s'inscrit dans la section transversale de l'orifice (23). Les sections transversales respectives de la partie longitudinale (32) et de l'orifice (23) présentent notamment des formes respectives sensiblement identiques entre elles.

Selon une caractéristique avantageuse de l'invention,
le dispositif de fixation (1) comporte un premier moyen de blocage (33),
le premier moyen de blocage (33) présente une configuration de blocage, dans laquelle il maintient l'axe de liaison (18) dans sa position longitudinale opérationnelle alors que le moyen d'immobilisation longitudinale (25) se trouve dans sa configuration d'ouverture,
le premier de moyen de blocage (33) quitte sa configuration de blocage par une action manuelle extérieure exercée sur lui.

Ainsi, lorsque le rotor (2) est au repos, une action manuelle extérieure sur l'axe de liaison (18) est nécessaire en vue de l'extraire de l'oeilleton (15, 16) et/ou de l'oreille (20, 21), dont il ne peut de fait pas s'extraire de lui-même. Selon les premier et deuxième exemples de réalisation, le premier moyen de blocage (33) comporte notamment une première gorge (34) intérieure de l'orifice (24) de l'oreille (21). Selon le troisième exemple de réalisation, le premier moyen de blocage (33) comporte notamment une première gorge (34) intérieure de l'orifice (23) de l'oreille (20). Le premier moyen de blocage (33) comporte également un élément élastiquement déformable (35). Dans ces exemples de réalisation, la première gorge (34) accueille l'élément élastiquement déformable (35). Le premier moyen de blocage (33) comporte par ailleurs une deuxième gorge (36) extérieure de l'axe de liaison (18). Dans la position longitudinale opérationnelle de ce dernier, l'élément élastiquement déformable (35) vient se loger dans la deuxième gorge (36), ce qui place le premier moyen de blocage (33) dans sa configuration de blocage. Ainsi, lorsque le moyen d'immobilisation longitudinale (25) se trouve dans sa configuration d'ouverture des figures 9, 16 et 23 respectivement, l'axe de liaison (18) peut demeurer dans sa position longitudinale opérationnelle. Une action manuelle extérieure est requise pour dégager le premier moyen de blocage (33) de sa configuration de blocage et ainsi permettre à l'axe de liaison (18) de quitter sa position longitudinale opérationnelle. Cette action manuelle extérieure permet de vaincre l'effort résistant produit par le premier moyen de blocage (33) sur l'axe de liaison (18) dans la configuration de blocage. Selon les exemples de réalisation, cet effort résistant est généré par l'élément élastiquement déformable (35). Par ailleurs, lors des opérations de montage / démontage du dispositif de fixation (1), le premier moyen de blocage (33) sert de moyen de mise en position axiale de l'axe de liaison (18) par rapport à la manille (10) et à la ou les oreilles (20, 21). En effet, le premier moyen de blocage (33) se trouve dans sa configuration de blocage seulement lorsque l'axe de liaison (18) est positionné, suivant l'axe géométrique (19), dans sa position longitudinale opérationnelle. Dans une autre position longitudinale de l'axe de liaison (18), telle que celle des vues éclatées des figures 5, 12 et 19 respectivement, le premier moyen de blocage (33) est dans une configuration non bloquée.

Selon une caractéristique avantageuse de l'invention,
le dispositif de fixation (1) comporte un deuxième moyen de blocage (37) limitant, voire empêchant un deuxième déplacement de l'axe de liaison (18) par rapport à la manille (10),
ce deuxième déplacement est en sens contraire du premier déplacement, suivant l'axe géométrique (19) et depuis la position longitudinale opérationnelle,
le deuxième moyen de blocage (37) comporte une troisième partie (38) de l'axe de liaison (18) et une quatrième partie (39) de l'oreille (20, 21) ou d'une oreille (20, 21) du dispositif de fixation (1),
les troisième et quatrième parties (38 et 39) peuvent coopérer l'une avec l'autre, directement ou indirectement.

Selon une variante du deuxième moyen de blocage (37) que les exemples de réalisation des figures comportent, la troisième partie (38) est située au niveau d'une extrémité (40, 41) de l'axe de liaison (18). Dans les premier et deuxième exemples de réalisation, la troisième partie (38) est située au niveau de l'extrémité (41) et peut venir en appui contre une quatrième partie (39) de l'autre oreille (21) distante de l'oreille (20). Ces troisième et quatrième parties (38 et 39) coopèrent directement l'une avec l'autre. Cette troisième partie (38) vient en appui contre la partie intérieure de l'orifice (24) de cette autre oreille (21) lorsque l'axe de liaison (18) est dans sa position longitudinale opérationnelle. Dans le troisième exemple de réalisation, la troisième partie (38) est constituée par la partie de retenue (28) située au niveau de l'extrémité (40) de l'axe de liaison (18). Cette partie de retenue (28) est une partie épaulée de l'axe de liaison (18). Cette troisième partie (38) peut venir en appui contre une branche (14) de la manille (10), la manille (10) venant à son tour en appui contre une deuxième partie (39) de l'oreille (20). Cette deuxième partie (39) comporte notamment la face de l'oreille (20) voisine de la branche (13) de la manille (10). Dans ce cas, les troisième et quatrième parties (38 et 39) coopèrent indirectement l'une avec l'autre.

Selon une caractéristique avantageuse de l'invention, dans la position longitudinale opérationnelle de l'axe de liaison (18), la troisième partie (38) est située dans l'encombrement de l'oreille (21) et/ou de la manille (10). Ainsi, pendant le fonctionnement de la machine, le deuxième moyen de blocage est protégé des chocs. Dans les premier et deuxième exemples de réalisation, la troisième partie (38) vient se loger à l'intérieur de l'orifice (24) de ladite autre oreille (21) lorsque l'axe de liaison (18) est dans sa position longitudinale opérationnelle.

Bien entendu, l'invention n'est pas limitée aux exemples de réalisation décrits et représentés sur les figures annexées. Des modifications restent possibles, notamment du point de vue de la constitution, de la disposition ou du nombre des divers éléments, par combinaison différente des caractéristiques susvisées, ou par substitution d'équivalents techniques, sans sortir pour autant du domaine de protection de l'invention.

## Revendications

1. Dispositif de fixation (1) d'un couteau (8) sur le rotor (2) d'une faucheuse-débroussailleuse (3), comportant :
- une manille (10) dont une branche (13, 14) est pourvue d'un oeilleton (15, 16), la manille (10) portant le couteau (8),
- un axe de liaison (18)
s'étendant en longueur suivant un axe géométrique (19) longitudinal qu'il présente,
pouvant, suivant cet axe géométrique (19), occuper une position longitudinale opérationnelle par rapport à la manille (10), dans laquelle position longitudinale opérationnelle l'axe de liaison (18) est engagé dans au moins une oreille (20, 21) solidaire du rotor (2), traverse l'oeilleton (15, 16) et est immobilisé dans l'oreille (20, 21) et dans l'oeilleton (15, 16) suivant l'axe géométrique (19),
- un moyen d'immobilisation longitudinale (25) de l'axe de liaison (18)
présentant une configuration de fermeture, dans laquelle le moyen d'immobilisation longitudinale (25) immobilise l'axe de liaison (18) dans sa position longitudinale opérationnelle par rapport à la manille (10),
présentant par ailleurs une configuration d'ouverture, dans laquelle le moyen d'immobilisation longitudinale (25) autorise un premier déplacement de l'axe de liaison (18) et de la manille (10) entre eux suivant l'axe géométrique (19), ce premier déplacement faisant quitter à l'axe de liaison (18) sa position longitudinale opérationnelle par rapport à la manille (10),
***caractérisé en ce que***
le moyen d'immobilisation longitudinale (25) est conçu pour être placé dans sa configuration d'ouverture par la manille (10) présentant une orientation non radiale par rapport au rotor (2),
le moyen d'immobilisation longitudinale (25) est conçu pour être placé dans sa configuration de fermeture par la manille (10) présentant une orientation radiale par rapport au rotor (2).

2. Dispositif de fixation (1) selon la revendication 1, ***caractérisé en ce que***
le moyen d'immobilisation longitudinale (25) comporte une première partie (26) de l'axe de liaison (18) et une deuxième partie (27) de l'oreille (20) ou de la manille (10), notamment de l'oeilleton (15),
il existe au moins une première position angulaire des première et deuxième parties (26 et 27) entre elles autour de l'axe géométrique (19), dans laquelle la première partie (26) est empêchée de traverser la deuxième parties (27) depuis la position longitudinale opérationnelle,
il existe une deuxième position angulaire des première et deuxième partie (26 et 27) entre elles autour de l'axe géométrique (19), dans laquelle la première partie (26) est autorisée à traverser la deuxième partie (27).

3. Dispositif de fixation (1) selon la revendication 2, ***caractérisé en ce que***
la manille (10), dans son orientation radiale par rapport au rotor (2), place les première et deuxième parties (26 et 27) dans leur première position angulaire relative,
la manille (10), dans son orientation non radiale par rapport au rotor (2), place les première et deuxième parties (26 et 27) dans leur deuxième position angulaire relative.

4. Dispositif de fixation (1) selon la revendication 2 ou 3, ***caractérisé en ce que***
la première partie (26) présente une première section transversale dépourvue de symétrie de révolution autour de l'axe géométrique (19),
la deuxième partie (27) présente une deuxième section transversale également dépourvue de symétrie de révolution autour de l'axe géométrique (19).

5. Dispositif de fixation (1) selon l'une quelconque des revendications 2 à 4, ***caractérisé en ce que*** dans la position longitudinale opérationnelle de l'axe de liaison (18), la première partie (26) et la deuxième partie (27) peuvent pivoter librement l'une par rapport à l'autre autour de l'axe géométrique (19) de l'axe de liaison (18).

6. Dispositif de fixation (1) selon l'une quelconque des revendications 2 à 5, ***caractérisé en ce que***
la manille (10), notamment l'oeilleton (15), comporte la deuxième partie (27),
le dispositif de fixation (1) comporte un moyen d'immobilisation en rotation (31) destiné à rendre l'axe de liaison (18), dans sa position longitudinale opérationnelle, immobile ou sensiblement immobile en rotation autour de l'axe géométrique (19) par rapport à l'oreille (20, 21).

7. Dispositif de fixation (1) selon la revendication 6, ***caractérisé en ce que***
le moyen d'immobilisation en rotation (31) comporte une liaison par coopération de formes entre une partie longitudinale (32) de l'axe de liaison (18) et l'orifice (23) de l'oreille (20) dans lequel l'axe de liaison (18) est engagé,
cette partie longitudinale (32) coopère avec l'orifice (23) de sorte à y être immobilisée en rotation autour de l'axe géométrique (19).

8. Dispositif de fixation (1) selon l'une quelconque des revendications 2 à 5, ***caractérisé en ce que***
l'oreille (20) comporte la deuxième partie (27),
le moyen d'immobilisation longitudinale (25) comporte une liaison par coopération de formes entre l'axe de liaison (18) et la manille (10),
cette liaison par coopération de formes est telle que l'axe de liaison (18) dans sa position longitudinale opérationnelle et la manille (10) pivotent conjointement autour de l'axe géométrique (19) par rapport à la deuxième partie (27).

9. Dispositif de fixation (1) selon l'une quelconque des revendications 1 à 8, ***caractérisé en ce que***
le dispositif de fixation (1) comporte un premier moyen de blocage (33),
le premier moyen de blocage (33) présente une configuration de blocage, dans laquelle il maintient l'axe de liaison (18) dans sa position longitudinale opérationnelle alors que le moyen d'immobilisation longitudinale (25) se trouve dans sa configuration d'ouverture,
le premier de moyen de blocage (33) quitte sa configuration de blocage par une action manuelle extérieure exercée sur lui.

10. Dispositif de fixation (1) selon l'une quelconque des revendications 1 à 9, ***caractérisé en ce que***
le dispositif de fixation (1) comporte un deuxième moyen de blocage (37) limitant, voire empêchant un deuxième déplacement de l'axe de liaison (18) par rapport à la manille (10),
ce deuxième déplacement est en sens contraire du premier déplacement, suivant l'axe géométrique (19) et depuis la position longitudinale opérationnelle,
le deuxième moyen de blocage (37) comporte une troisième partie (38) de l'axe de liaison (18) et une quatrième partie (39) de l'oreille (20, 21) ou d'une oreille (20, 21) du dispositif de fixation (1),
les troisième et quatrième parties (38 et 39) peuvent coopérer l'une avec l'autre, directement ou indirectement.

11. Dispositif de fixation (1) selon la revendication 10, ***caractérisé en ce que*** dans la position longitudinale opérationnelle de l'axe de liaison (18), la troisième partie (38) est située dans l'encombrement de l'oreille (21) et/ou de la manille (10).

12. Rotor (2) d'une faucheuse-débroussailleuse (3) équipé d'au moins un couteau (8), ***caractérisé en ce qu**'il* comporte au moins un dispositif de fixation (1) du couteau (8) selon l'une quelconque des revendications 1 à 11.

13. Faucheuse-débroussailleuse (3) comportant un rotor (2) équipé d'au moins un couteau (8), ***caractérisée en ce que*** le rotor (2) comporte au moins un dispositif de fixation (1) du couteau (8) selon l'une quelconque des revendications 1 à 11.

## Patentansprüche

1. Befestigungsvorrichtung (1) für ein Messer (8) an dem Rotor (2) eines Böschungsmähers (3) mit
- einem Gabelkopf (10), von dem ein Schenkel (13, 14) mit einer Öse (15, 16) versehen ist, wobei der Gabelkopf (10) das Messer (8) trägt,
- einer Verbindungsachse (18),
die sich längs gemäß einer geometrischen Längsachse (19) erstreckt, die sie umfasst,
die, gemäß dieser geometrischen Längsachse (19), eine in Bezug auf den Gabelkopf (10) längs verlaufende Betriebsstellung einnehmen kann, wobei in der längs verlaufenden Betriebsstellung die Verbindungsachse (18) in mindestens einen Flügel (20, 21) eingreift, der mit dem Rotor (2) fest verbunden ist, die Öse (15, 16) durchsetzt und im Flügel (20, 21) und in der Öse (15, 16) gemäß der geometrischen Längsachse (19) angehalten wird,
- einem Längsfeststellmittel (25) der Verbindungsachse (18),
das eine Schließkonfiguration aufweist, in der das Längsfeststellmittel (25) die Verbindungsachse (18) in ihrer längs verlaufenden Betriebsstellung in Bezug auf den Gabelkopf (10) anhält,
das ferner eine Öffnungskonfiguration aufweist, in der das Längsfeststellmittel (25) eine erste Verschiebung der Verbindungsachse (18) und des Gabelkopfes (10) zueinander gemäß der geometrischen Längsachse (19) gestattet, wobei diese erste Verschiebung dafür sorgt, dass die Verbindungsachse (18) ihre längs verlaufende Betriebsstellung in Bezug auf den Gabelkopf (10) verlässt,
***dadurch gekennzeichnet, dass***
das Längsfeststellmittel (25) ausgelegt ist, um in seine Öffnungskonfiguration vom Gabelkopf (10) gebracht zu werden, der eine nicht-radiale Ausrichtung in Bezug auf den Rotor (2) aufweist,
das Längsfeststellmittel (25) ausgelegt ist, um in seine Schließkonfiguration vom Gabelkopf (10) gebracht zu werden, der eine radiale Ausrichtung in Bezug auf den Rotor (2) aufweist.

2. Befestigungsvorrichtung (1) nach Anspruch 1, ***dadurch gekennzeichnet*, *dass***
das Längsfeststellmittel (25) einen ersten Teil (26) der Verbindungsachse (18) und einen zweiten Teil (27) des Flügels (20) oder des Gabelkopfes (10), insbesondere der Öse (15), umfasst,
es mindestens eine erste Winkelstellung des ersten und zweiten Teils (26 und 27) zueinander rund um die geometrische Längsachse (19) gibt, in welcher der erste Teil (26) daran gehindert wird, den zweiten Teil (27) ausgehend von der längs verlaufenden Betriebsstellung zu durchsetzen, es eine zweite Winkelstellung des ersten und zweiten Teils (26 und 27) zueinander rund um die geometrische Längsachse (19) gibt, in welcher es dem ersten Teil (26) gestattet ist, den zweiten Teil (27) zu durchsetzen.

3. Befestigungsvorrichtung (1) nach Anspruch 2, ***dadurch gekennzeichnet*, *dass***
der Gabelkopf (10) in seiner radialen Ausrichtung in Bezug auf den Rotor (2) den ersten und zweiten Teil (26 und 27) in ihre erste relative Winkelstellung bringt,
der Gabelkopf (10) in seiner nicht-radialen Ausrichtung in Bezug auf den Rotor (2) den ersten und zweiten Teil (26 und 27) in ihre zweite relative Winkelstellung bringt.

4. Befestigungsvorrichtung (1) nach Anspruch 2 oder 3, ***dadurch gekennzeichnet*, *dass***
der erste Teil (26) einen ersten Querschnitt ohne Rotationssymmetrie rund um die geometrische Längsachse (19) aufweist,
der zweite Teil (27) einen zweiten Querschnitt ebenfalls ohne Rotationssymmetrie rund um die geometrische Längsachse (19) aufweist.

5. Befestigungsvorrichtung (1) nach irgend einem der Ansprüche 2 bis 4, ***dadurch gekennzeichnet, dass*** sich in der längs verlaufenden Betriebsstellung der Verbindungsachse (18) der erste Teil (26) und der zweite Teil (27) rund um die geometrische Längsachse (19) der Verbindungsachse (18) frei zueinander drehen können.

6. Befestigungsvorrichtung (1) nach irgend einem der Ansprüche 2 bis 5, ***dadurch gekennzeichnet*, *dass***
der Gabelkopf (10), insbesondere die Öse (15), den zweiten Teil (27) umfasst,
die Befestigungsvorrichtung (1) ein Drehfeststellmittel (31) umfasst, das dazu bestimmt ist, die Verbindungsachse (18) in ihrer längs verlaufenden Betriebsstellung rund um die geometrische Längsachse (19) in Bezug auf den Flügel (20, 21) drehfest oder im Wesentlichen drehfest zu machen.

7. Befestigungsvorrichtung (1) nach Anspruch 6, ***dadurch gekennzeichnet*, *dass***
das Drehfeststellmittel (31) eine Verbindung durch Formübereinstimmung zwischen einem Längsteil (32) der Verbindungsachse (18) und der Mündung (23) des Flügels (20) umfasst, in welche die Verbindungsachse (18) eingreift,
dieser Längsteil (32) mit der Mündung (23) so zusammenwirkt, dass er dort rund um die geometrische Längsachse (19) drehfest ist.

8. Befestigungsvorrichtung (1) nach irgend einem der Ansprüche 2 bis 5, ***dadurch gekennzeichnet*, *dass***
der Flügel (20) den zweiten Teil (27) umfasst,
das Längsfeststellmittel (25) eine Verbindung durch Formübereinstimmung zwischen der Verbindungsachse (18) und dem Gabelkopf (10) umfasst,
diese Verbindung durch Formübereinstimmung derartig ist, dass sich die Verbindungsachse (18) in ihrer längs verlaufenden Betriebsstellung und der Gabelkopf (10) gemeinsam rund um die geometrische Längsachse (19) in Bezug auf den zweiten Teil (27) drehen.

9. Befestigungsvorrichtung (1) nach irgend einem der Ansprüche 1 bis 8, ***dadurch gekennzeichnet*, *dass***
die Befestigungsvorrichtung (1) ein erstes Verriegelungsmittel (33) umfasst,
das erste Verriegelungsmittel (33) eine Verriegelungskonfiguration aufweist, in der es die Verbindungsachse (18) in ihrer längs verlaufenden Betriebsstellung hält, während sich das Längsfeststellmittel (25) in seiner Öffnungskonfiguration befindet,
das erste Verriegelungsmittel (33) seine Verriegelungskonfiguration durch eine externe manuelle Handlung, die darauf ausgeübt wird, verlässt.

10. Befestigungsvorrichtung (1) nach irgend einem der Ansprüche 1 bis 9, ***dadurch gekennzeichnet*, *dass***
die Befestigungsvorrichtung (1) ein zweites Verriegelungsmittel (37) umfasst, das eine zweite Verschiebung der Verbindungsachse (18) in Bezug auf den Gabelkopf (10) begrenzt oder sogar verhindert,
diese zweite Verschiebung in die entgegengesetzte Richtung der ersten Verschiebung verläuft, gemäß der geometrischen Längsachse (19) und ausgehend von der längs verlaufenden Betriebsstellung,
das zweite Verriegelungsmittel (37) einen dritten Teil (38) der Verbindungsachse (18) und einen vierten Teil (39) des Flügels (20, 21) oder eines Flügels (20, 21) der Befestigungsvorrichtung (1) umfasst,
der dritte und vierte Teil (38 und 39) direkt oder indirekt zusammenwirken können.

11. Befestigungsvorrichtung (1) nach Anspruch 10, ***dadurch gekennzeichnet*, *dass*** sich in der längs verlaufenden Betriebsstellung der Verbindungsachse (18) der dritte Teil (38) im Platzbedarf des Flügels (21) und/oder des Gabelkopfes (10) befindet.

12. Rotor (2) eines Böschungsmähers (3), der mit mindestens einem Messer (8) ausgestattet ist, ***dadurch gekennzeichnet*, *dass*** er mindestens eine Befestigungsvorrichtung (1) für ein Messer (8) nach irgend einem der Ansprüche 1 bis 11 umfasst.

13. Böschungsmäher (3) mit einem Rotor (2), der mit mindestens einem Messer (8) ausgestattet ist, ***dadurch gekennzeichnet*, *dass*** der Rotor (2) mindestens eine Befestigungsvorrichtung (1) für ein Messer (8) nach irgend einem der Ansprüche 1 bis 11 umfasst.

## Claims

1. Device (1) for fastening a knife (8) to the rotor (2) of a hedge and grass cutter (3), including:
- a clevis (10) that has one leg (13, 14) fitted with an eyelet (15, 16), the clevis (10) carrying the knife (8);
- a connecting axis (18)
extending lengthwise along a longitudinal geometric axis (19) that it presents,
that can, along this geometric axis (19), occupy an operational longitudinal position relative to the clevis (10), in which operational longitudinal position the connecting axis (18) is engaged in at least one wing (20, 21) rigidly fastened to the rotor (2), crosses the eyelet (15, 16) and is immobilised in the wing (20, 21) and in the eyelet (15, 16) along the geometric axis (19);
- a longitudinal securing means (25) for the connecting axis (18) having a closing configuration in which the longitudinal securing means (25) secures the connecting axis (18) in its operational longitudinal position relative to the clevis (10);
also having an opening configuration in which the longitudinal securing means (25) allows a first movement of the connecting axis (18) and the clevis (10) relative to one another along the geometric axis (19), this first movement compelling the connecting axis (18) to leave its operational longitudinal position relative to the clevis (10);
***characterised in that***
the longitudinal securing means (25) is designed to be placed in its opening configuration by the clevis (10) having a non-radial orientation relative to the rotor (2);
the longitudinal securing means (25) is designed to be placed in its closing configuration by the clevis (10) having a radial orientation relative to the rotor (2).

2. Fixing device (1) according to claim 1, ***characterised in that***
the longitudinal securing means (25) includes a first part (26) of the connecting axis (18) and a second part (27) of the wing (20) or the clevis (20), in particular the eyelet (15);
there is at least one first angular position of the first and second parts (26 and 27) relative to one another around the geometric axis (19), in which the first part (26) is prevented from crossing the second part (27) from the longitudinal operational position;
there is a second angular position of the first and second parts (26 and 27) relative to one another around the geometric axis (19), in which the first part (26) is allowed to cross the second part (27).

3. Fixing device (1) according to claim 2, ***characterised in that***
the clevis (10), in its radial orientation relative to the rotor (2), places the first and second parts (26 and 27) in their first relative angular position;
the clevis (10), in its non-radial orientation relative to the rotor (2), places the first and second parts (26 and 27) in their second relative angular position.

4. Fixing device (1) according to claim 2 or 3, ***characterised in that***
the first part (26) has a first cross-section without rotational symmetry around the geometric axis (19);
the second part (27) has a second cross-section also without rotational symmetry around the geometric axis (19).

5. Fixing device (1) according to any one of claims 2 to 4, ***characterised in that*** in the longitudinal operational position of the connecting axis (18), the first part (26) and the second part (27) can freely swivel relative to each other around the geometric axis (19) of the connecting axis (18).

6. Fixing device (1) according to any one of claims 2 to 5, ***characterised in that***
the clevis (10), in particular the eyelet (15), includes the second part (27);
the fixing device (1) includes a rotating securing means (31) designed to render the connecting axis (18), in its longitudinal operational position, secure or substantially secure while rotating around the geometric axis (19) relative to the wing (20, 21).

7. Fixing device (1) according to claim 6, ***characterised in that***
the rotating securing means (31) includes a form-fitting connection between a longitudinal part (32) of the connecting axis (18) and the orifice (23) of the wing (20) in which the connecting axis (18) is engaged;
this longitudinal part (32) cooperates with the orifice (23) in such a way that it is secured in it while rotating around the geometric axis (19).

8. Fixing device (1) according to any one of claims 2 to 5, ***characterised in that***
the wing (20) includes the second part (27);
the longitudinal securing means (25) includes a form-fitting connection between the connecting axis (18) and the clevis (10);
this form-fitting connection is such that the connecting axis (18) in its longitudinal operational position and the clevis (10) jointly swivel around the geometric axis (19) relative to the second part (27).

9. Fixing device (1) according to any one of claims 1 to 8, ***characterised in that***
the fixing device (1) includes a first locking means (33);
the first locking means (33) has a locking configuration in which it maintains the connecting axis (18) in its longitudinal operational position while the longitudinal securing means (25) is in its opening configuration;
the first locking means (33) leaves its locking configuration by an external manual action being exerted on it.

10. Fixing device (1) according to any one of claims 1 to 9, ***characterised in that***
the fixing device (1) includes a second locking means (37) that limits or prevents a second movement of the connecting axis (18) relative to the clevis (10);
this second movement is in the opposite direction to the first movement, along the geometric axis (19) and from the longitudinal operational position;
the second locking means (37) includes a third part (38) of the connecting axis (18) and a fourth part (39) of the wing (20, 21) or a wing (20,21) of the fixing device (1);
the third and fourth parts (38 and 39) can cooperate with each other, directly or indirectly.

11. Fixing device (1) according to claim 10, ***characterised in that*** in the longitudinal operational position of the connecting axis (18), the third part (38) is situated in the bulk of the wing (21) and/or of the clevis (10).

12. Rotor (2) of a hedge and grass cutter (3) fitted with at least one knife (8), ***characterised in that*** it includes at least one device (1) to fasten the knife (8) according to any one of claims 1 to 11.

13. A hedge and grass cutter (3) including a rotor (2) fitted with at least one knife (8), ***characterised in that*** the rotor (2) includes at least one device (1) to fasten the knife (8) according to any one of claims 1 to 11.
